# DEMANDE DE BREVET EUROPEEN

(11) **EP 2 101 540 A1**
(43) Date de publication de la demande: **16.09.2009**
(21) Numéro de dépôt: 09155032.7
(22) Date de dépôt: 12.03.2009
(51) Int. Cl.: H04W 76/02, H04M 3/42

(54) **Configuration de communication entre deux terminaux, selon un contexte d'appel.**

(30) Priorité: 14.03.2008 FR 0851683
(71) Demandeur: Orangefrance, 94110 Arceuil Cedex (FR)
(72) Inventeur: Chazelas, Axel, 75017, PARIS (FR); Auneveux, Guillaume, 94120, FONTENAY SOUS BOIS (FR); Dargent, Yves, 97141, VIEUX-FORT (FR)
(74) Mandataire: Cabinet Plasseraud

(57) **Abrégé**

La présente invention concerne l'établissement d'une communication entre deux terminaux via un ou plusieurs réseaux de télécommunications. A cet effet, on prévoit de :
- générer (S3), à partir d'une première entité de validation associée à un premier terminal, au moins un élément de configuration de la communication, basé sur un premier contexte d'appel du premier terminal;
- générer (S3), à partir d'une deuxième entité de validation associée à un deuxième terminal, au moins un élément de configuration de la communication, basé sur un deuxième contexte d'appel du deuxième terminal;
- recevoir (S4) lesdits éléments de configuration;
- établir (S5) une liste comportant au moins un choix possible de configuration de la communication, à partir desdits élément de configuration; et
- configurer (S6) la communication selon l'un des choix de ladite liste.

## Description

La présente invention concerne l'établissement d'une communication entre deux terminaux via un ou plusieurs réseaux de télécommunications.

Lorsqu'un utilisateur est abonné à un service de prestation de télécommunications, il a accès à ces prestations lorsqu'il se trouve couvert par un réseau d'origine rattaché à son abonnement. S'il se trouve hors de la couverture de ce réseau, il n'a pas accès à ces prestations. Le cas peut se présenter où il se trouve sous la couverture d'un réseau différent, dit réseau visité. L'utilisateur est alors dit en itinérance dans le réseau visité.

Actuellement, lorsqu'un utilisateur se trouve en itinérance et qu'il répond à un appel, il est facturé pour un coût d'itinérance. C'est-à-dire qu'il paye le coût de l'acheminement de l'appel entre son réseau d'origine et le réseau qu'il visite.

Le document US-6,741,849 décrit un cas où un premier utilisateur renvoie ses appels entrants vers un deuxième utilisateur. Lorsque le deuxième utilisateur répond à un appel destiné au premier utilisateur alors qu'il est en itinérance, il n'est pas facturé pour le coût d'itinérance mais c'est le premier utilisateur qui l'est.

Dans ce document, il n'est pas proposé à l'appelant de prendre en charge le coût de l'itinérance, ni même de lui proposer un choix pour le faire.

Or ce coût d'itinérance peut être élevé. Le problème est accru lorsque les réseaux se trouvent dans deux pays différents, ce qui peut dissuader un utilisateur de répondre à un appel lorsqu'il se trouve dans un réseau visité.

La présente invention vient améliorer la situation.

A cet effet, l'invention propose un procédé de configuration d'une communication entre un terminal appelant et un terminal appelé. Le procédé comprend des étapes de génération, par des entités de validation, d'éléments de configuration basés sur des contextes d'appel de l'appelé d'une part et de l'appelant d'autre part. Le procédé comprend en outre des étapes de réception de ces éléments de configuration par un contrôleur d'appel, une étape d'établissement d'une liste de choix possibles de configurations à partir des éléments de configuration reçus, et une étape de configuration de la communication selon un choix de la liste.

On entend par configuration d'une communication, toutes les mesures nécessaires à la mise en oeuvre de la communication telle que sollicitée par l'appelant. Il peut s'agir de sélectionner des matériels, réserver des ressources de communication, enregistrer des données de communication, ou encore d'autres mesures.

Un contexte d'appel comprend un ensemble d'informations relatives à une sollicitation d'une prestation et à un utilisateur donné. Ces informations peuvent être une identification de l'utilisateur, un débit de ligne disponible sur la ligne qu'il utilise, une sollicitation d'une prestation donnée, une identification d'autres utilisateurs qu'il souhaite impliquer dans la prestation, une localisation, ou encore d'autres informations.

Un élément de configuration permet au contrôleur d'appel de tenir compte des différents contextes d'appel qu'il reçoit. Un élément peut être une identification d'un matériel à utiliser, l'identification d'un utilisateur à localiser, une localisation ou encore d'autres éléments.

Ainsi, avec l'invention, il est possible de configurer la communication de manière adaptée aux contextes d'appels à la fois de l'appelé et de l'appelant.

En outre, le contrôleur d'appels soumet à une autorité de gestion du premier terminal la liste en vue d'une sélection par cette autorité d'un choix dans la liste ; et configure la communication selon l'un des choix de la liste.

On entend par liste de configurations possibles, un ensemble de configurations déduites des éléments reçus. Selon les éléments de configuration reçus, il peut y avoir plusieurs manières de configurer la communication. Il peut s'agir d'un contexte d'appel non prévu par l'appelant dans sa sollicitation de prestation, qui nécessite son accord, il peut aussi s'agir d'autres cas.

Une autorité de gestion du terminal, peut être un serveur stockant des préférences de l'utilisateur, ou encore l'utilisateur lui-même ou tout autre entité physique ou informatique capable de gérer certaines modalités de la prestation.

Ainsi, il est possible de faire contrôler et valider les modalités par le gérant du terminal appelant, communication par communication, ou de manière préétablie.

Selon un autre aspect de l'invention, les entités de validation comprennent respectivement des modules d'attribution connectés à des mémoires respectives comportant des profils d'utilisateur.

On entend par profil d'utilisateur, un ensemble d'informations relatives à l'utilisateur telles que ses préférences d'utilisation de prestation, des statistiques d'utilisation, des ordres de choix de configuration, une identification d'un compte de paiement, ou d'autres informations encore.

Les mémoires peuvent être des serveurs distants, mais également des mémoires internes au module d'attribution.

Un module d'attribution permet notamment de recevoir des informations provenant desdites mémoires ou du contrôleur d'appel. Ce module est apte à stocker ces informations dans une mémoire interne ou distante. De plus, il comprend des moyens processeurs d'information lui permettant de générer une description d'un contexte d'appel. Un tel module est également apte à transmettre et éventuellement stocker cette description.

Ainsi la description de configuration est générée en fonction de critères préétablis. Ces critères peuvent être l'utilisation d'une option de communication pour des appels à destination d'un utilisateur particulier, ou d'autres critères encore.

Selon un autre aspect de l'invention, le profil d'utilisateur comporte une autorisation de prise en charge d'un coût de communication induit par l'appelé.

Une autorisation de prise en charge d'un coût de communication, signifie que l'utilisateur accepte d'être facturé pour un coût qu'il n'a pas induit, et qui sans cette autorisation, serait facturé à autre que lui.

Un coût induit par l'appelé peut être l'utilisation d'une ressource de communication, comme un matériel. Cela peut également correspondre à l'utilisation d'une option de communication.

Ainsi, il est possible de prendre en charge tous les coûts d'une communication, d'un bout à l'autre.

Selon un autre aspect de l'invention, ce coût est un coût d'itinérance.

On entend par coût d'itinérance, le coût induit par l'acheminement d'une communication entre un réseau de communication rattaché à l'abonnement d'un utilisateur, et un réseau différent du précédent mais couvrant ledit utilisateur.

Selon un autre aspect de l'invention, les contextes d'appel comprennent des indicateurs de qualité de service.

Ces indicateurs peuvent comprendre des mesures de bande passante, un rapport signal à bruit ou encore d'autres mesures techniques. Ces mesures peuvent être effectuées sur la ligne utilisée par l'utilisateur auquel se rapporte ledit contexte.

Ainsi, avant d'établir la communication, il est possible de connaître les conditions d'appel d'un bout à l'autre.

Selon un autre aspect de l'invention, la configuration de la communication indique des équipements adaptés en fonction des indicateurs de qualité de service.

Ainsi, si l'utilisation d'un service n'est pas compatible avec une qualité de ligne, il sera notifié à un utilisateur un message dans en ce sens. De même, le choix des équipements utilisés lors de la communication peut être fait de manière judicieuse, de sorte à ne pas les monopoliser inutilement.

La présente invention vise également un système adapté pour mettre en oeuvre le procédé ci-dessus.

La présente invention vise également un programme d'ordinateur comprenant des instructions pour la mise en oeuvre du procédé, ainsi qu'un support lisible par un ordinateur sur lequel est enregistré un tel programme.

D'autres caractéristiques et avantages de l'invention apparaîtront à l'examen de la description détaillée ci-après, et des dessins annexés sur lesquels :
- la figure 1 illustre un contexte général d'application du procédé selon l'invention,
- la figure 2 illustre de manière détaillée une unité de validation selon l'invention,
- la figure 3 illustre des étapes d'une mise en oeuvre du procédé réalisées par l'unité de validation,
- la figure 4 illustre une mise en oeuvre du procédé selon l'invention.

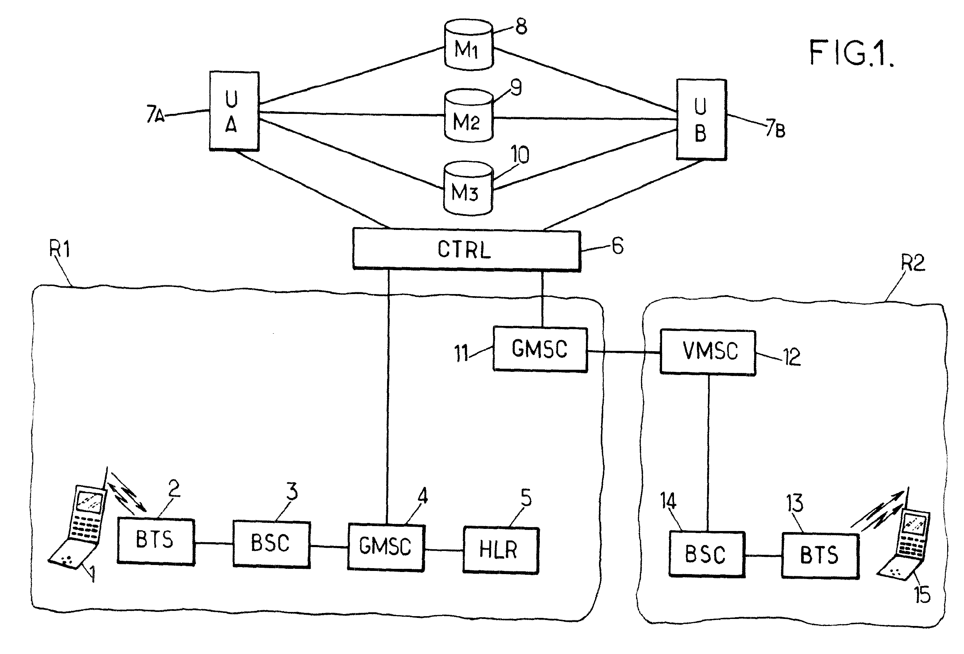

Dans le contexte général d'application du procédé de la figure 1, un utilisateur A, « l'appelant », est abonné à un service de prestations de télécommunications dans le réseau de télécommunications mobile R1, « le réseau d'origine ». Il souhaite établir une communication, par exemple une communication vocale ou de transfert de données, avec un utilisateur B, « l'appelé », lui aussi abonné à un service de prestations de télécommunications dans le réseau de télécommunications mobile R1.

Des accords d'itinérance sont conclus entre deux ou plusieurs exploitants de réseaux de télécommunications mobiles, et ont pour but de permettre aux usagers de leurs services de pouvoir utiliser, lorsqu'ils se déplacent, le réseau de celui qui assure une couverture radio dans la zone où ils se trouvent. Lorsqu'un abonné se déplace en dehors de la zone couverte par le réseau de son fournisseur de services, les appels qu'il émet ou qui lui sont destinés sont acheminés à travers le réseau d'un autre fournisseur, avec lequel un accord d'itinérance a été conclu.

Bien entendu, la présente invention ne se limite pas à des réseaux de télécommunications mobiles, elle est notamment compatible avec un ensemble de réseaux de types différents comprenant au moins un réseau cellulaire mobile.

Dans le présent exemple, B ne se trouve pas couvert par le réseau de télécommunications mobiles R1, mais par un autre réseau de télécommunications mobiles R2, « le réseau visité », et l'utilisateur A souhaite prendre en charge ce coût.

Afin de configurer les différents équipements qui vont prendre part à la communication, un contrôleur d'appel 6 est en relation notamment avec une passerelle 11 entre les réseaux R1 et R2 et un centre de commutation d'appel 4.

Le centre de commutation d'appel reçoit la sollicitation de prestation émanant de A. Pour cela A est équipé d'un terminal mobile 1, sur lequel il compose une ou plusieurs séries de caractères afin d'appeler B. Eventuellement, il compose des codes d'accès à un service, ou un préfixe indiquant les options qu'il invoque pour son appel.

Le terminal mobile 1 établit alors une liaison radio avec une station de base 2 (BTS) d'une borne radio (non représentée) du réseau R1.

Cette liaison comporte les informations concernant la prestation que l'appelant sollicite. Ici, il s'agit d'une communication vocale pour laquelle il ne suffit que d'indiquer le numéro de l'appelé, mais il pourrait s'agir d'un message multimédia, ou encore d'une consultation d'un serveur, ou autre, pour lequel il faudrait adjoindre des informations telles qu'un identifiant ou un mot de passe.

De plus, il est possible que l'appelant indique des codes d'informations de configuration de la communication qu'il souhaite établir.

Les informations transitent ensuite par le contrôleur de stations de base 3 (BSC), puis par le centre de commutation 4 (GMSC) du réseau mobile R1.

Un registre de localisation 5 (HLR) est alors sollicité par le centre de commutation 4 afin d'authentifier l'appelant A et reconnaître l'identification du terminal mobile 1. Seules les informations nécessaires à cet effet sont transmises, et le registre ne reçoit pas d'information concernant la sollicitation de prestation de l'appelant.

Le contrôleur d'appel 6 est apte à identifier des terminaux d'utilisateur et à leur associer une unité de validation 7A, 7B avec laquelle il peut communiquer.

Ces unités de validation peuvent communiquer avec des bases de données 8, 9, 10 contenant des informations utiles à la description d'un contexte d'appel.

La passerelle 11 peut se mettre en relation avec un centre de commutation 12 du réseau R2 qui peut lui, rechercher une borne radio (non représentée) couvrant l'appelé. Cette borne radio comprend un contrôleur 14 (BSC) et une station de base 13 (BTS) permettant d'acheminer l'appel.

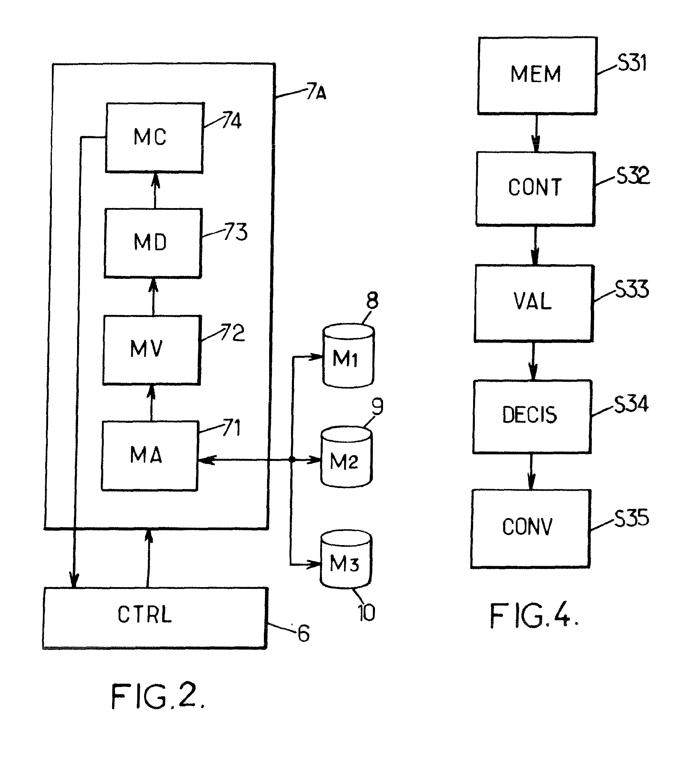

Une unité de validation est représentée sur la figure 2. Une telle unité comprend un module d'attribution 71, chargé de recueillir les informations d'appel émanant de l'appelant, comme par exemple son identification, et les prestations qu'il souhaite se voir offrir.

Ce module 71 peut également entrer en communication avec des bases de données 8, 9, 10 contenant des données de profil d'utilisateur, des données d'ordre technique concernant les conditions de l'appel ou encore d'autres données. Le module peut également lire une donnée et en déduire le besoin d'interroger une autre base.

Le module d'attribution est apte à enregistrer les diverses informations qu'il reçoit afin de générer une description de contexte d'appel.

Un contexte d'appel contient par exemple toutes les informations issues des bases de données et émanant de l'appelant relatives à la sollicitation de l'appelant. Un contexte peut par exemple comprendre : une mesure de la qualité de la ligne disponible pour l'appelant, une prestation demandée, une ressource matérielle nécessaire à la mise en oeuvre de la prestation et l'état d'un compte de paiement associé à l'appelant.

Les contextes d'appel générés par les entités de validation peuvent être obtenus de plusieurs manières. Ils peuvent être obtenus par transfert d'informations préalable à la communication. Ces informations peuvent être par exemple l'appartenance à une communauté de service. Ils peuvent également être obtenus par interaction avec un équipement spécifique, interne ou externe au système de communication utilisé. Par exemple, cet équipement peut être un centre de gestion de « miles », d'appartenance à un club, ou à une famille. Cela peut également être un système d'information d'un opérateur de télécommunications.

Les contextes d'appel, côté appelé et côté appelant, peuvent être générés simultanément à la communication, éventuellement en temps réel. Il peut également être prévu un canal de communication entre les entités de validation. Dans ce cas, une entité sera une « entité maître » et l'autre sera une « entité esclave ». On peut également prévoir un contrôleur central chargé de piloter un ensemble de contrôleurs d'appels, par exemple sur une zone donnée.

D'ailleurs, les éléments de configuration peuvent être reçus par un même contrôleur d'appel mais ils peuvent, en variante, être reçus par deux contrôleurs d'appel différents : l'un, par exemple, dédié aux éléments de configuration côté appelant, l'autre dédié aux éléments de configuration côté appelé. Dans ce dernier cas, il peut être prévu que les contrôleurs soient aptes à communiquer entre eux afin de traiter les données. Il pourra également être prévu un système chargé de recueillir ces éléments au moyen d'un indicateur commun ou cohérent mis à jour par ce système. Un tel indicateur peut être un « mile », une appartenance à une communauté, un numéro de session, ou autre.

Une fois ce contexte généré, il est transmis à une unité de validation 72. Une trace du contexte peut être sauvegardée dans le module 71, ou bien être transmise à une autre entité de stockage à des fins statistiques.

Le module de validation 72 est chargé de vérifier si la prestation sollicitée par l'appelant est réalisable. Pour cela elle dispose de règles. Ces règles sont stockées au sein du module de validation. Il est également envisageable que ces règles soient stockées dans une entité distante, et rapatriées pour exécuter les vérifications.

Les règles de validation peuvent contenir des valeurs à comparer avec celles contenues dans le contexte d'appel. Par exemple, une somme minimale pour accéder à un service qui doit être inférieure à la somme indiquée dans le compte de paiement.

Une fois les vérifications réalisées, le module de validation émet notamment une liste de conditions validées vers un module de décision 73. Il peut également émettre un message d'erreur. Il peut également émettre une autre information.

Ce module de décision vérifie en fonction de la prestation sollicitée si un nombre de conditions nécessaires sont remplies, ou s'il y a besoin d'autres informations. Il génère alors une décision comportant l'ensemble des actions à effectuer à un module de conversion 74.

Ces actions peuvent être de plusieurs natures. Par exemple, il peut s'agir de contacter une entité de validation correspondant à l'appelé, solliciter l'utilisation de ressources particulières du réseau, notifier une erreur à l'appelant, ou encore d'autres actions.

Ce module de conversion est chargé de générer au moins un élément de configuration comme par exemple une série d'instructions pour le contrôleur d'appel afin d'exécuter les actions définies par l'unité de décision. L'ensemble de ces instructions est compilé dans un message envoyé au contrôleur.

Ce message décrit au moins en partie une configuration de la communication.

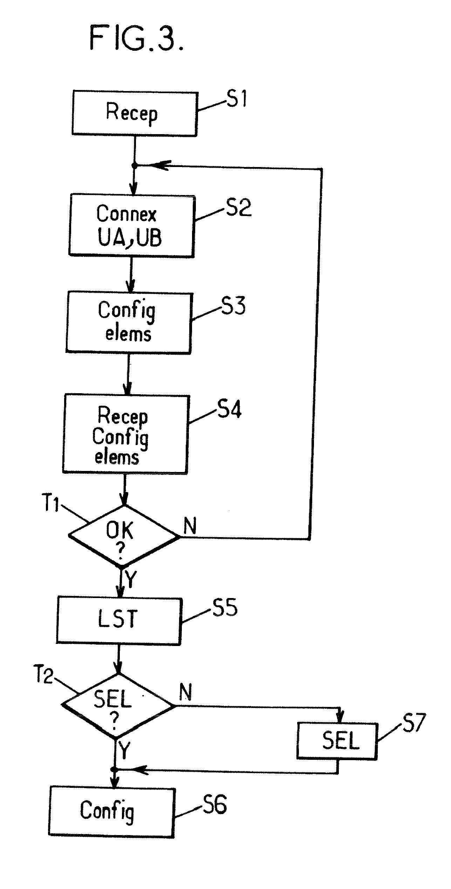

En référence à la figure 3, il est maintenant décrit une mise en oeuvre du procédé selon l'invention dans le cadre de l'exemple évoqué plus haut.

Suite à la sollicitation de l'appelant, le centre de commutation 4 transmet les informations de l'appel ainsi qu'une identification du terminal mobile 1 au contrôleur d'appel 6. Le contrôleur d'appel reçoit ces informations au cours d'une étape S1.

Ensuite, lors de l'étape S2 le contrôleur d'appel recherche dans une table de correspondance (non représentée) une identification d'une unité de validation 7A correspondant au terminal mobile 1 de l'appelant. Cette table de correspondance peut par exemple être stockée dans une mémoire du contrôleur d'appel. Elle peut également être stockée dans une base de données extérieure.

Chaque abonné du réseau de télécommunications R1 est géré par une unité de validation qui lui correspond.

Le contrôleur d'appel, une fois l'unité 7A identifiée, lui transmet les informations d'appel concernant l'appelant.

L'unité de validation 7A reçoit ces informations et génère au moins un élément de configuration de communication, lors d'une étape S3. Cet élément peut également être un message d'erreur ou d'échec, le cas échéant.

On se réfère maintenant à la figure 4 pour décrire en détails l'étape S3.

Lors de l'étape S31, l'unité de validation stocke les informations d'appel dans au moins un module d'attribution 71. Ce module est apte à communiquer avec les différentes bases de données 8, 9, 10.

Par exemple, la base de données 8 contient le profil d'abonnement de l'appelant. Ce profil peut par exemple contenir la liste des prestations auxquelles l'appelant a accès, une liste de comptes de prépaiement à débiter, ou encore une pré-configuration des appels selon un ou plusieurs critères. Un critère peut par exemple être d'utiliser un service particulier lorsque l'appelant désigne un appelé prédéfini.

Dans le présent exemple, le profil de l'appelant contient une information indiquant qu'il prend en charge le coût d'acheminement de l'appel du réseau d'origine au réseau visité lorsque l'appelé correspond à l'utilisateur B. Pour cela, l'identification de l'utilisateur B a été préenregistrée.

Cette base de données est interrogée par le module d'attribution 71. En fonction des informations reçues, d'autres bases de données 8, 9 sont interrogées, il peut par exemple s'agir de bases de données spécifiques à une prestation souscrite et invoquée par l'appelant. Il peut également s'agir de bases de données contenant des informations techniques concernant l'appel. Il peut également s'agir de bases de données contenant l'état d'un compte de prépaiement.

Les informations qui sont stockées dans le module d'attribution 71 permettent d'établir un contexte d'appel de l'appelant lors de l'étape S32.

Une fois le contexte d'appel généré et stocké par le module d'attribution, il est analysé par l'unité de validation afin de valider la prestation sollicitée par l'appelant lors d'une étape S33. Par exemple, il peut s'agir de vérifier qu'un compte de prépaiement est créditeur, qu'une qualité de transmission, comme un débit de ligne, est adéquate à la prestation sollicitée ou encore d'autres actions.

Pour cela, un module de comparaison 72 reçoit le contexte et effectue des vérifications selon des règles stockées dans ce module.

Une fois ces vérifications effectuées, le gestionnaire de validation transmet à un module de décision 73 une liste d'informations validées. Ce module de décision examine lors d'une étape S34 si des conditions nécessaires à l'établissement de l'appel sont réunies, et s'il y a besoin d'autres informations. Il peut par exemple y avoir besoin de solliciter un accord de l'appelant, ou de récupérer des informations concernant l'appelé.

Dans le présent exemple, il faut que le contrôleur d'appel vérifie l'identité de l'appelé et vérifie s'il est en itinérance.

L'unité de validation transmet alors une définition de configuration de communication à réaliser, comprenant la définition des informations à récupérer et la définition des prestations à réaliser à un module de conversion 74. Ce module de conversion génère ensuite lors d'une étape S35 des éléments de configuration comprenant notamment des instructions à exécuter afin de mettre en oeuvre la communication. Cette liste d'instructions est ensuite fournie au contrôleur d'appel.

En cas de vérification négative ou d'erreur, une instruction de notification à l'appelant pour l'impossibilité d'appel est envoyée à l'appelant.

Dans une mise en oeuvre de l'invention, les utilisateurs des réseaux de télécommunications sont marqués par le réseau au moyen d'une marque dite « Tag camel », et ce, aussi bien pour les appels entrants et sortants. Afin de générer les contextes d'appel, l'entité de validation peut utiliser ces marques et les comparer à des contextes prédéfinis stockés dans des bases de données. Ainsi, on peut envisager des actions prédéfinies à mener en fonction de certains contextes prédéfinis.

De retour à la figure 3, lors du test T1, le contrôleur d'appel vérifie s'il reste des informations à récupérer, notamment celles de contexte d'appel de l'appelé. Dans le présent exemple, il faut vérifier l'identité de l'appelé et déterminer s'il se trouve dans son réseau d'origine.

Ce test peut être remplacé par une instruction d'interrogation de l'unité de validation 7B associée à l'appelé.

Ensuite le contrôleur d'appel sollicite le gestionnaire de validation 7B, cette fois correspondant à l'appelé. Tout comme pour l'appelant, un contexte d'appel est décrit et des éléments de configuration sont transmis au contrôleur selon les étapes S2 à S4.

Dans le cadre du présent exemple, le contexte d'appel de l'appelé mentionne que l'appelé se trouve dans un réseau visité. Cette information peut notamment être présente sur le réseau de télécommunications visité. Par exemple, dans un réseau mobile GSM, cette information est accessible via le centre de commutation.

Le contrôleur d'appel reçoit alors à l'étape S4 les éléments de configuration issus de l'unité 7B.

Lors de l'étape S5, le contrôleur établit une liste de choix de configurations possibles en fonction des éléments reçus, d'une part de l'unité 7A et d'autre part de l'unité 7B.

Lors du test T2, il détermine s'il y a un choix préférentiel indiqué par les éléments de configuration. Ce choix préférentiel peut par exemple être issu du profil utilisateur de l'appelant.

Si c'est le cas, il configure la communication selon ce choix lors de l'étape S6.

Sinon, il soumet la liste de choix à l'appelant, via la station de base utilisée par l'appelant et configure la communication selon le choix de l'appelant.

Dans le présent exemple, le choix est préétabli et donc la communication est automatiquement configurée de sorte que c'est l'appelant qui va prendre en charge le coût d'itinérance.

Le contrôleur d'appel invoque alors la passerelle 11 entre le réseau R1 et R2. Cette passerelle est chargée d'acheminer l'appel entre l'appelant et l'appelé du réseau R1 au réseau R2.

Pour cela, la passerelle 11 se met en liaison avec le centre de commutation visité 12 du réseau R2, qui va être chargé de trouver la station de base 13 qui couvre l'utilisateur B, afin d'acheminer l'appel vers le contrôleur 14 correspondant à cette station 13 et finalement acheminer l'appel vers le terminal mobile 15 de l'utilisateur B.

A la fin de la communication, le contrôleur d'appel transmet les informations d'utilisation de ressources, en particulier celles d'acheminement entre les réseaux R1 et R2, qu'il a reçu pour le pilotage de la communication. Accédant aux informations concernant les contextes d'appel de l'appelé et de l'appelant, il a reçu tous les éléments de configuration de communication, notamment le choix de la prise en charge du coût d'itinérance par l'appelant. Dans ce cas, les contextes d'appel contiennent le type de facturation prévue pour la communication prise en exemple, entre autre soit un compte prépayé ou soit un compte post payé. En outre, en fonction de ces informations, le contrôleur d'appel génère les tickets d'appels et de service permettant d'établir la facturation correspondant à la communication établie.

Ainsi, l'appelant a pu prendre en charge le coût de l'itinérance de l'utilisateur B appelé. Cette possibilité peut être avantageuse, par exemple dans le cas de la prise en charge des coûts d'itinérance par une entreprise, l'employeur appelant ses salariés en déplacement professionnel. De même, lorsqu'un parent souhaite contacter son enfant à l'étranger. En effet, ce coût d'itinérance est souvent élevé, ce qui peut dissuader de répondre.

L'exemple donné ne limite pas les applications possibles de l'invention. On peut envisager d'autres services, comme par exemple un appel visiophonique. L'appelant et l'appelé disposent de terminaux permettant ce type d'appel. L'appelant souhaite mettre en oeuvre cette fonction, mais l'appelé ne veut pas être surfacturé en accédant au service de visiophonie, il souhaite simplement payer pour une communication vocale. Les unités de validation de chacun (appelé et appelant) font mention de ces souhaits, et proposent à l'appelant de prendre en charge le coût de la fonctionnalité.

Bien entendu, un fonctionnement symétrique est envisageable où par exemple c'est l'appelant qui est en itinérance et c'est l'appelé qui prend en charge le coût d'itinérance.

## Revendications

1. Procédé de configuration d'une communication entre un premier terminal (1), appelant, et un deuxième terminal (15), appelé, comprenant les étapes :
- générer (S3), à partir d'une première entité de validation (7A) associée au premier terminal, au moins un élément de configuration de la communication, basé sur un premier contexte d'appel du premier terminal ;
- générer (S3), à partir d'une deuxième entité de validation (7B) associée au deuxième terminal, au moins un élément de configuration de la communication, basé sur un deuxième contexte d'appel du deuxième terminal ;
et dans lequel un contrôleur d'appels (6) :
- reçoit (S4) lesdits éléments de configuration ;
- établit (S5) une liste comportant au moins un choix possible de configuration de la communication, à partir desdits élément de configuration ;
- soumet à une autorité de gestion du premier terminal ladite liste en vue d'une sélection par ladite autorité d'un choix dans la liste ; et
- et configure (S6) la communication selon l'un des choix de ladite liste émanant de ladite autorité.

2. Procédé selon la revendication 1, dans lequel les première et deuxième entités comportent respectivement des premier et deuxième modules d'attribution, connectés à des mémoires respectives comportant des profils d'utilisateurs.

3. Procédé selon la revendication 2, dans lequel le profil utilisateur contient une autorisation de prise en charge par l'appelant d'un coût de communication induit par l'appelé.

4. Procédé selon la revendication 3, dans lequel ledit coût est un coût d'acheminement d'une communication entre deux réseaux de communication.

5. Procédé selon la revendication 1, dans lequel les contextes d'appel comprennent des indicateurs de qualité de service.

6. Procédé selon la revendication 1, dans lequel la configuration indique des équipements adaptés à la communication en fonction d'indicateurs de qualité de service.

7. Système de communication entre un premier terminal (1), appelant, et un deuxième terminal (15), appelé, comprenant :
- une première entité de validation (7A) associée au premier terminal, adaptée pour générer au moins un élément de configuration de la communication, basé sur un premier contexte d'appel du premier terminal ;
- une deuxième entité de validation (7B) associée au deuxième terminal, adaptée pour générer au moins un élément de configuration de la communication, basé sur un deuxième contexte d'appel du deuxième terminal ;
- un contrôleur d'appels (6) adapté pour :
recevoir lesdits éléments de configuration ;
. établir une liste comportant au moins un choix possible de configuration de la communication, à partir desdits éléments de configuration ;
. soumettre à une autorité de gestion du premier terminal ladite liste en vue d'une sélection par ladite autorité d'un choix dans la liste ; et
. configurer la communication selon l'un des choix de ladite liste émanant de ladite autorité.

8. Programme d'ordinateur comportant des instructions pour la mise en oeuvre du procédé selon la revendication 1 lorsque ce programme est exécuté par un processeur.

9. Support lisible par un ordinateur sur lequel est enregistré un programme d'ordinateur comportant des instructions pour la mise en oeuvre du procédé selon la revendication 1 lorsque ce programme est exécuté par un processeur.
